# DEMANDE DE BREVET EUROPEEN

(11) **EP 4 197 732 A1**
(43) Date de publication de la demande: **21.06.2023**
(21) Numéro de dépôt: 22212158.4
(22) Date de dépôt: 08.12.2022
(51) Int. Cl.: B29B 17/00

(54) **PROCÉDÉ DE PRÉPARATION D'UN MATÉRIAU POLYMÈRE THERMOPLASTIQUE À PARTIR DE MATÉRIAUX CONSTITUTIFS D'AU MOINS DEUX COUCHES POLYMÈRES THERMOPLASTIQUES D'UN CÂBLE ÉLECTRIQUE**

(30) Priorité: 16.12.2021 FR 2113694
(71) Demandeur: Nexans, 92400 Courbevoie (FR)
(72) Inventeur: MAZEL, Christelle, 38300 RUY (FR); PEREGO, Gabriele, 20144 Milan (IT); LUTON, Marie-Hélène, 92400 COURBEVOIE (FR)
(74) Mandataire: Ipsilon

(57) **Abrégé**

Procédé de préparation d'un matériau polymère thermoplastique à partir de matériaux constitutifs d'au moins deux couches polymères thermoplastiques d'un câble électrique.

Procédé de préparation d'un matériau polymère thermoplastique (M) à partir de matériaux constitutifs d'au moins deux couches polymères thermoplastiques (3; 4; 5) d'un câble électrique (1), où lesdites couches polymères thermoplastiques (3; 4; 5) ont des compositions différentes, le procédé comportant les étapes suivantes :
(a) mélange, à l'état fluide, desdits matériaux constitutifs des couches polymères thermoplastiques (3; 4; 5), ce par quoi on obtient le matériau polymère thermoplastique (M) ; puis
(b) récupération du matériau polymère thermoplastique (M) ainsi préparé.

## Description

L'invention concerne le domaine des câbles électriques et plus spécifiquement celui du recyclage de certains de leurs constituants polymères. Elle s'intéresse notamment à un procédé de préparation d'un matériau polymère thermoplastique à partir de matériaux constitutifs de certaines couches polymères d'un câble électrique, ainsi qu'au matériau polymère thermoplastique ainsi obtenu et à ses utilisations.

L'invention s'applique typiquement, mais non exclusivement, aux domaines des câbles électriques destinés au transport d'énergie, notamment aux câbles d'énergie à moyenne tension (notamment de 6 à 45-60 kV) ou à haute ou très haute tension (notamment supérieure à 60 kV, et pouvant aller jusqu'à 400 kV), qu'ils soient en courant continu ou alternatif, dans les domaines du transport d'électricité aérien, sous-marin, terrestre, ou encore de l'aéronautique.

Il est connu d'utiliser des câbles électriques comportant des couches polymères à base de polyéthylène réticulé (XLPE). La réticulation du polyéthylène permet, entre autres, d'assurer une stabilité dimensionnelle à haute température, d'empêcher la fissuration sous contrainte, et d'améliorer la résistance aux produits chimiques de ces couches polymères.

Toutefois, il est particulièrement difficile, voire impossible, de recycler de telles couches polymères car le polyéthylène une fois réticulé ne peut plus être ni fondu par chauffage, ni extrudé.

Il a été décrit l'emploi d'autres types de couches polymères, à savoir des couches polymères thermoplastiques, notamment à base de polypropylène, qui de fait, sont recyclables.

Le document FR3090989, par exemple, décrit un câble électrique ayant une tenue au vieillissement en température améliorée, le câble comportant au moins une couche semi-conductrice obtenue à partir d'une composition polymère comprenant au moins un matériau polymère thermoplastique à base de polypropylène, au moins un premier antioxydant, et au moins un désactivateur de métal. Il est décrit qu'une telle couche semi-conductrice est non réticulée car thermoplastique, et donc qu'elle est individuellement recyclable. Le câble peut comporter en outre une couche électriquement isolante en un matériau polymère thermoplastique, notamment à base de polypropylène.

Une couche polymère thermoplastique telle qu'obtenue à partir des compositions polymères telles que décrites dans le document FR3090989, à base de polypropylène, présente l'avantage de conserver des propriétés mécaniques et électriques similaires à celles d'une couche similaire qui serait à base de polyéthylène réticulé mais en présentant l'avantage pratique d'être recyclable.

Toutefois, peu de solutions concrètes ont été proposées qui permettent de valoriser en pratique cette capacité de recyclage des couches polymères thermoplastiques, notamment celles à base de polypropylène telles que décrites dans le document FR3090989.

Un but de la présente invention est de fournir une voie de valorisation, notamment économiquement intéressante, des capacités de recyclage des couches polymères thermoplastiques, notamment celles à base de polypropylène telles que décrites dans le document FR3090989.

A cet effet, la présente invention propose de valoriser ensemble des couches polymères thermoplastiques de compositions différentes d'un câble électrique, par exemple des couches semi-conductrices et des couches électriquement isolantes, notamment à base de polypropylène telles que décrites dans le document FR3090989. Dans le cadre de la présente invention, les inventeurs ont maintenant mis en évidence que cette valorisation conjointe permet d'accéder aisément à un matériau polymère thermoplastique intéressant et valorisable pour de multiples applications.

Plus précisément, selon un premier aspect, la présente invention a pour objet un procédé de préparation d'un matériau polymère thermoplastique, désigné ci-après à des fins de concision par « matériau (M) », à partir de matériaux constitutifs d'au moins deux couches polymères thermoplastiques d'un câble électrique, où lesdites couches polymères thermoplastiques ont des compositions différentes, le procédé comportant les étapes suivantes :
(a) mélange, à l'état fluide, desdits matériaux constitutifs des couches polymères thermoplastiques, ce par quoi on obtient le matériau polymère thermoplastique (M) ; puis
(b) récupération du matériau polymère thermoplastique (M) ainsi préparé.

Selon un autre aspect développé plus en détail ci-après, l'invention a également pour objet le matériau polymère thermoplastique (M) tel qu'on l'obtient selon le procédé de l'invention. Un autre objet de l'invention concerne les différentes applications des matériaux de ce type, décrits plus en détails plus loin dans la présente description.

De façon générale, il est fréquent qu'un câble électrique possède plusieurs couches polymères de compositions et propriétés différentes, telles que par exemple des couches semi-conductrice(s) et électriquement isolante(s). En effet, ces deux types de couches possèdent par exemple des compositions et propriétés différentes, en particulier en termes de conductivité électrique. Ainsi, lorsque l'on récupère des couches polymères de compositions et propriétés différentes de câbles électriques usagés, elles sont généralement recyclées séparément l'une de l'autre afin de conserver leurs propriétés respectives. Par exemple, les couches semi-conductrices sont recyclées ensemble et les couches électriquement isolantes sont recyclées ensemble. Cela permet leur réutilisation, en tant que couches semi-conductrices, d'une part, et en tant que couches électriquement isolantes, d'autre part. Un tel recyclage s'avère toutefois complexe et onéreux à mettre en oeuvre.

En particulier, la plupart des couches polymères thermoplastiques employées dans les câbles électriques, en particulier lorsqu'elles sont obtenues à partir d'une composition polymère thermoplastique à base de polypropylène, ont un fort pouvoir d'adhésion avec les couches sus- et sous-jacentes du câble ce qui ne permet qu'une séparation approximative de ces couches polymères thermoplastiques du câble. Par exemple, dans les câbles comportant des couches polymères thermoplastiques semi-conductrice interne, électriquement isolante et semi-conductrice externe, la séparation de la couche semi-conductrice interne et de la couche électriquement isolante, ainsi que la séparation de la couche électriquement isolante et de la couche semi-conductrice externe ne peut être qu'approximative la plupart du temps dans ces câbles.

Les inventeurs ont maintenant découvert de façon surprenante dans le cadre de la présente invention que le mélange de matériaux constitutifs de couches polymères thermoplastiques de compositions différentes, en particulier lorsqu'il s'agit de couches semi-conductrice(s) et électriquement isolante(s), notamment à base de polypropylène telles que décrites dans le document FR3090989, permet d'obtenir un matériau présentant une bonne homogénéité et des propriétés physico-chimiques et mécaniques remarquables, et donc hautement valorisable. Le procédé selon l'invention permet ainsi de recycler ensemble des couches polymères thermoplastiques de compositions différentes, en particulier des couches semi-conductrice(s) et électriquement isolante(s), et non plus de manière séparée.

Au sens de la présente description, un matériau constitutif d'une couche polymère thermoplastique d'un câble électrique tel qu'il est mis en oeuvre dans le procédé de l'invention est un matériau issu de tout ou partie de ladite couche polymère thermoplastique. Il peut notamment se présenter sous forme réduite, par exemple en poudre ou en petits morceaux, notamment sous forme de granulés. Par exemple, il peut s'agir d'une partie d'une couche déterminée du câble (comprenant typiquement une section d'une longueur donnée de la couche prise sur substantiellement tout l'épaisseur de ladite couche), qui est ensuite avantageusement découpée en tronçons, débitée en petits morceaux, notamment en granulés, ou broyée. Le matériau obtenu peut être mélangé avec le matériau constitutif d'une autre couche déterminée du câble avant ou pendant la mise en oeuvre du procédé de l'invention. Alternativement, les matériaux constitutifs des deux couches polymères thermoplastiques employés dans le procédé selon l'invention peuvent se présenter, dès le départ, sous la forme d'un mélange des matériaux constitutifs des deux couches. Par exemple, ils peuvent être obtenus en séparant ensemble deux couches (ou plus), par exemple par délamination, ces couches ainsi séparées ensemble étant ensuite avantageusement découpées en tronçons, débitées en petits morceaux, notamment en granulés, ou broyées.

Les matériaux mis en oeuvre selon l'invention peuvent avantageusement provenir de couches polymères thermoplastiques qui sont en contact physique direct dans le câble. Dans ce cas, selon un mode de réalisation intéressant, les matériaux sont obtenus en séparant ensemble, notamment par délamination, les couches en contact plutôt qu'en séparant séparément les couches.

Chacune des couches polymères thermoplastiques, dont les matériaux constitutifs sont utilisés pour la préparation du matériau polymère thermoplastique M, est de préférence obtenue à partir d'une composition polymère thermoplastique à base de polyoléfines, et plus préférentiellement à base de polypropylène.

Selon un mode de réalisation intéressant, les couches polymères thermoplastiques, dont les matériaux constitutifs sont utilisés pour la préparation du matériau polymère thermoplastique M, ont des conductivités électriques différentes. En particulier, les couches polymères thermoplastiques comprennent au moins une couche semi-conductrice et au moins une couche électriquement isolante, ces deux couches pouvant notamment être en contact physique direct l'une avec l'autre dans le câble. Dans ce cas, le procédé selon l'invention est particulièrement avantageux en ce qu'il permet de simplifier le recyclage des couches semi-conductrice(s) et électriquement isolante(s) thermoplastiques qui possèdent, comme mentionné ci-dessus, des compositions et propriétés différentes, en particulier en termes de conductivité électrique. En particulier, le procédé selon l'invention permet de recycler ensemble ces couches semi-conductrice(s) et électriquement isolante(s) thermoplastiques, et non plus de manière séparée.

Typiquement, le câble électrique dont sont issus les matériaux utilisés dans le cadre de l'invention comporte au moins un élément électriquement conducteur allongé et plusieurs couches entourant l'élément électriquement conducteur allongé. Parmi ces couches, le câble comporte au moins deux couches polymères thermoplastiques de compositions différentes entourant l'élément électriquement conducteur allongé. Ce sont les matériaux constitutifs de ces couches polymères thermoplastiques qui sont mises en oeuvre dans l'étape (a) du procédé de l'invention.

Les couches polymères thermoplastiques dont les matériaux constitutifs sont mis en oeuvre dans l'étape (a) sont des couches non réticulées.

Dans la présente description, les expressions « couche non réticulée » ou « couche thermoplastique » sont considérées comme synonymes et désignent une couche dont le taux de gel selon la norme ASTM D2765-01 (extraction au xylène) est d'au plus 30% environ, de préférence d'au plus 20% environ, de façon particulièrement préférée d'au plus 10% environ, de façon plus particulièrement préférée d'au plus 5% environ, et de façon encore plus particulièrement préférée de 0%.

Dans la présente description, on entend par « couche électriquement isolante » une couche dont la conductivité électrique est de préférence strictement inférieure à 1.10⁻¹⁰ S/m (siemens par mètre) (mesurée à 25°C en courant continu).

Dans la présente description, on entend par « couche semi-conductrice » une couche dont la conductivité électrique est de préférence strictement supérieure à 1.10⁻³ S/m, et de préférence inférieure à 1.10³ S/m (mesurée à 25°C en courant continu).

La couche électriquement isolante a plus particulièrement une conductivité électrique inférieure à celle de la couche semi-conductrice. Plus particulièrement, la conductivité électrique de la couche semi-conductrice peut être au moins 10 fois supérieure à la conductivité électrique de la couche électriquement isolante, de préférence au moins 100 fois supérieure à la conductivité électrique de la couche électriquement isolante, et de façon particulièrement préférée au moins 1000 fois supérieure à la conductivité électrique de la couche électriquement isolante.

Le mélange, à l'état fluide, des matériaux constitutifs des couches polymères thermoplastiques effectué dans l'étape (a) du procédé de l'invention peut avantageusement être réalisé de manière à obtenir un mélange homogène.

Le mélange peut ainsi notamment être réalisé pendant une durée suffisante et en exerçant une contrainte mécanique de cisaillement suffisante pour obtenir un mélange homogène. Par exemple, le mélange est réalisé typiquement pendant au moins 2 minutes, par exemple pendant 2 à 5 minutes.

Le mélange peut être mis en oeuvre à l'aide de tout moyen de mélange adapté aux matières thermoplastiques.

On peut utiliser par exemple un malaxeur, notamment fermé, ou une extrudeuse. L'extrudeuse peut être du type monovis, du type bi-vis, notamment co-rotatives interpénétrées ou non interpénétrées, ou contrarotatives interpénétrées ou non interpénétrées, ou du type co-malaxeur telle que par exemple une extrudeuse commercialisée par la société BUSS. On peut aussi utiliser la technique de compactage. Celle-ci consiste à introduire les matériaux constitutifs des couches polymères thermoplastiques, tous deux sous forme de poudres, dans une presse à granuler, puis à forcer le mélange à travers une filière. Typiquement, une presse à granuler comprend un galet en rotation qui vient comprimer/mélanger le mélange des matériaux constitutifs des couches polymères thermoplastiques, puis le mélange est pressé dans des canaux de compression d'une filière perforée de façon à former un granulé cylindrique qui est ensuite découpé à l'aide d'un dispositif de coupe situé sous la filière. La friction engendrée lors du mélange des poudres dans la presse permet de passer le point de ramollissement voire de fusion des matériaux constitutifs des couches polymères thermoplastiques.

### Câble électrique

Les matériaux employés dans le procédé de l'invention sont issus d'au moins deux couches polymères thermoplastiques de composition distinctes initialement présentes dans un câble électrique, ces couches étant avantageusement (mais pas nécessairement) en contact direct dans ledit câble. Lorsque le câble électrique comporte plus de deux couches polymères thermoplastiques, le procédé de l'invention peut être mis en oeuvre avec les matériaux constitutifs de seulement deux de ces couches (ces deux couches étant alors avantageusement en contact direct dans le câble), ou bien avec plus de deux de ces couches, par exemple (mais pas nécessairement) avec toutes les couches polymères thermoplastiques du câble.

Dans le cas où le câble électrique comporte au moins une couche semi-conductrice et/ou au moins une couche électriquement isolante réticulées, ces dernières ne sont pas utilisées pour la mise en oeuvre du procédé selon l'invention. De façon plus générale, seuls les matériaux issus de couches polymères thermoplastiques sont utilisées dans le cadre de l'invention, à l'exclusion de matériaux issus de couches réticulées. Avantageusement, l'invention met en oeuvre des couches polymères thermoplastiques obtenues à partir d'une composition polymère thermoplastique à base de polypropylène.

De préférence, le câble utilisé dans le cadre de l'invention ne comporte pas de couche semi-conductrice ou électriquement isolante réticulée, ce qui permet au besoin de recycler la totalité des couches semi-conductrice(s) et électriquement isolante(s) du câble.

Dans une première variante, le câble électrique utilisé dans le cadre de l'invention comporte une seule couche électriquement isolante non réticulée entourant l'élément électriquement conducteur allongé et une seule couche semi-conductrice non réticulée entourant la couche électriquement isolante, ou inversement, une seule couche semi-conductrice non réticulée entourant l'élément électriquement conducteur allongé et une seule couche électriquement isolante non réticulée entourant la couche semi-conductrice. Le câble est alors typiquement un câble basse tension.

Dans cette première variante, la couche électriquement isolante et la couche semi-conductrice sont des couches polymères thermoplastiques, chacune d'entre elle étant avantageusement obtenue à partir d'une composition polymère à base de polypropylène.

Ainsi, dans cette première variante, ce sont les matériaux constitutifs de la couche électriquement isolante et la couche semi-conductrice qui sont mélangés ensemble lors de l'étape (a). Selon cette variante, l'étape (a) peut avantageusement ne mettre en oeuvre que ces deux matériaux, mais il n'est pas exclu dans l'absolu que l'étape (a) mette en oeuvre d'autres matériaux polymères thermoplastiques issus par exemple d'autres couches du câble.

Dans une deuxième variante, le câble électrique utilisé dans le cadre de l'invention comporte une couche semi-conductrice non réticulée entourant l'élément électriquement conducteur allongé, dite couche semi-conductrice interne, une couche électriquement isolante non réticulée entourant la couche semi-conductrice interne et une couche semi-conductrice non réticulée entourant la couche électriquement isolante, dite couche semi-conductrice externe. Le câble est alors typiquement un câble moyenne ou haute tension.

Dans cette deuxième variante, la couche électriquement isolante et au moins l'une des couches semi-conductrices interne et externe sont des couches polymères thermoplastiques, qui sont notamment chacune obtenue à partir d'une composition polymère à base de polypropylène.

Ainsi, dans cette deuxième variante, ce sont les matériaux constitutifs de la couche électriquement isolante et d'au moins l'une des couches semi-conductrices interne et externe qui sont mélangés ensemble lors de l'étape (a).

Selon un mode de réalisation particulier de la deuxième variante, à la fois la couche électriquement isolante et les deux couches semi-conductrices interne et externe sont des couches polymères thermoplastiques, en particulier chacune obtenue à partir d'une composition polymère à base de polypropylène. Ainsi, dans ce mode de réalisation, ce sont les matériaux constitutifs de la couche électriquement isolante et des deux couches semi-conductrices interne et externe qui sont mélangés ensemble lors de l'étape (a).

Selon un autre mode de réalisation particulier de la deuxième variante, seules la couche électriquement isolante et la couche semi-conductrice interne sont des couches polymères thermoplastiques, en particulier chacune obtenue à partir d'une composition polymère à base de polypropylène. Dans ce mode de réalisation, la couche semi-conductrice externe est de préférence une couche polymère thermoplastique, en particulier obtenue à partir d'une composition polymère à base de polyéthylène. Ce mode de réalisation peut correspondre à un câble, par exemple moyenne tension, dans lequel la couche semi-conductrice externe peut être facilement dénudée du câble. Ainsi, dans ce mode de réalisation, ce sont les matériaux constitutifs de la couche électriquement isolante et de la couche semi-conductrice interne qui sont mélangés ensemble lors de l'étape (a).

Ainsi, selon cette deuxième variante, l'étape (a) peut avantageusement ne mettre en oeuvre que deux matériaux (i.e. matériaux constitutifs de la couche électriquement isolante et de la couche semi-conductrice interne)ou trois matériaux (i.e. matériaux constitutifs de la couche électriquement isolante et des couches semi-conductrices interne et externe), mais il n'est pas exclu dans l'absolu que l'étape (a) mette en oeuvre d'autres matériaux polymères thermoplastiques issus par exemple d'autres couches du câble.

Selon un autre mode de réalisation particulier de la deuxième variante, la couche semi-conductrice interne, la couche électriquement isolante et la couche semi-conductrice externe constituent une isolation tricouche. En d'autres termes, la couche électriquement isolante est en contact physique direct avec la couche semi-conductrice interne, et la couche semi-conductrice externe est en contact physique direct avec la couche électriquement isolante.

Selon un autre mode de réalisation particulier de la deuxième variante, le câble électrique comporte deux couches électriquement isolantes entre les couches semi-conductrices interne et externe. Au moins l'une de ces couches électriquement isolantes, de préférence les deux, sont des couches polymères thermoplastiques, qui sont notamment chacune obtenue à partir d'une composition polymère à base de polypropylène.

Le câble électrique peut comprendre en outre une gaine extérieure de protection, notamment une gaine électriquement isolante.

Le câble électrique peut comprendre en outre un écran électrique (e.g. métallique). Dans ce cas, la gaine extérieure de protection entoure ledit écran électrique.

Le câble électrique concerne plus particulièrement le domaine des câbles électriques fonctionnant en courant continu (DC) ou en courant alternatif (AC).

### Séparation des couches polymères thermoplastiques de compositions différentes du câble électrique

Le procédé peut comporter ou non une étape de séparation des couches polymères thermoplastiques du câble électrique. Cela peut permettre de récupérer les couches polymères thermoplastiques, notamment semi-conductrice(s) et électriquement isolante(s), qui entouraient initialement l'élément électriquement conducteur allongé du câble.

Dans le cas où le procédé comporte une étape de séparation, cette dernière est généralement réalisée avant l'étape (a).

La séparation peut être réalisée de façon non-sélective de manière à récupérer ensemble les couches polymères thermoplastiques de compositions différentes, notamment les couches semi-conductrice(s) et électriquement isolante(s). Ce mode de réalisation, privilégié selon l'invention, permet de simplifier la séparation par rapport aux modes de recyclage généralement envisagés où les couches ayant des compositions différentes, par exemple les couches semi-conductrice(s) et électriquement isolante(s), sont chacune recyclée séparément. Selon l'invention, il n'est plus nécessaire de séparer sélectivement chacune des couches ayant des compositions différentes, par exemple les couches semi-conductrice(s) et électriquement isolante(s).

Dans un exemple où le câble électrique utilisé dans le cadre de l'invention comporte une couche semi-conductrice interne entourant l'élément électriquement conducteur allongé du câble, une couche électriquement isolante entourant la couche semi-conductrice interne et une couche semi-conductrice externe entourant la couche électriquement isolante, et que parmi ces trois couches, seules la couche semi-conductrice interne et la couche électriquement isolante sont des couches polymères thermoplastiques, en particulier chacune obtenue à partir d'une composition polymère à base de polypropylène, la séparation est réalisée de façon non-sélective de manière à récupérer ensemble la couche semi-conductrice interne et la couche électriquement isolante.

Dans un autre exemple où le câble électrique utilisé dans le cadre de l'invention comporte une couche semi-conductrice interne entourant l'élément électriquement conducteur allongé du câble, une couche électriquement isolante entourant la couche semi-conductrice interne et une couche semi-conductrice externe entourant la couche électriquement isolante, et que l'ensemble de ces trois couches sont des couches polymères thermoplastiques, en particulier chacune obtenue à partir d'une composition polymère à base de polypropylène, la séparation est réalisée de façon non-sélective de manière à récupérer ensemble les trois couches, à savoir la couche électriquement isolante et les couches semi-conductrices interne et externe.

De manière alternative, la séparation peut être réalisée de façon sélective de manière à récupérer, d'une part, la ou les couches polymères thermoplastiques ayant une même première composition, par exemple la ou les couches semi-conductrices, et d'autre part, la ou les couches ayant une même deuxième composition différente de la première, par exemple la ou les couches électriquement isolantes.

La séparation peut être effectuée par tout moyen connu.

Par exemple, le câble peut être broyé de manière à être réduit en petits morceaux, notamment en poudre ou en granulés, de préférence sous forme de granulés, qui subissent ensuite différentes étapes, tels que des étapes de granulation, notamment par densimétrie, soufflerie et aspiration, et/ou de tamisage de manière à séparer les couches polymères thermoplastiques, notamment semi-conductrice(s) et électriquement isolante(s), des autres éléments constitutifs du câble.

Le câble peut également subir un rabotage ou un dénudage, de préférence automatisé, permettant de récupérer, de façon sélective ou non, les couches polymères thermoplastiques, notamment semi-conductrice(s) et électriquement isolante(s), du câble.

Une fois séparées du câble, les couches polymères thermoplastiques, notamment semi-conductrice(s) et électriquement isolante(s), peuvent subir, de préférence avant l'étape (a), une étape de nettoyage, notamment par solvant, et/ou de broyage de manière à les réduire en petits morceaux et faciliter leur manipulation, notamment en poudre ou en granulés, de préférence sous forme de granulés.

### Mise en oeuvre des matériaux constitutifs des couches polymères thermoplastiques, notamment semi-conductrice(s) et électriquement isolante(s), à l'état fluide dans l'étape (a)

Dans l'étape (a), les matériaux constitutifs des couches polymères thermoplastiques, notamment semi-conductrice(s) et électriquement isolante(s), sont mélangées ensemble à l'état fluide. Par « état fluide », on entend un état permettant un mélange intime des matériaux constitutifs des couches polymères thermoplastiques.

Cet état fluide peut être un état ramolli ou fondu des matériaux constitutifs des couches polymères thermoplastiques.

Cet état fluide peut être obtenu par un traitement thermique permettant un apport de chaleur suffisant aux matériaux constitutifs des couches polymères thermoplastiques et/ou par application d'une contrainte mécanique de cisaillement suffisante sur les matériaux constitutifs des couches polymères thermoplastiques.

Cet état fluide peut être obtenu par un procédé d'extrusion.

Les matériaux constitutifs des couches polymères thermoplastiques, notamment semi-conductrice(s) et électriquement isolante(s), peuvent être soumises à un traitement thermique lors de l'étape (a) ou préalablement à cette étape.

Ce traitement thermique peut permettre d'atteindre l'état fluide nécessaire au mélange des matériaux constitutifs des couches polymères thermoplastiques, semi-conductrice(s) et électriquement isolante(s). Il peut permettre de ramollir voire de fondre les matériaux constitutifs des couches polymères thermoplastiques, notamment semi-conductrice(s) et électriquement isolante(s).

Le traitement thermique est typiquement réalisé à l'aide d'une résistance électrique chauffante ou tout autre moyen de chauffage adapté.

De préférence, dans l'étape (a), les matériaux constitutifs des couches polymères thermoplastiques, notamment semi-conductrice(s) et électriquement isolante(s), sont employées à l'état fondu. Pour ce faire, les matériaux constitutifs des couches polymères thermoplastiques, notamment semi-conductrice(s) et électriquement isolante(s), sont soumises à un traitement thermique, lors de l'étape (a) ou préalablement à cette étape, permettant de fondre leurs compositions polymères thermoplastiques, et les compositions polymères thermoplastiques fondues sont mélangées ensemble.

Ainsi, typiquement, le matériau polymère thermoplastique M est issu du mélange des compositions polymères thermoplastiques fondues des matériaux constitutifs de chacune des couches polymères thermoplastiques, notamment semi-conductrice(s) et électriquement isolante(s), employés dans l'invention, typiquement toutes les couches semi-conductrice(s) et électriquement isolante(s) polymères thermoplastiques du câble électrique (typiquement deux couches semi-conductrices, à savoir interne et externe, et une couche électriquement isolante).

De préférence, lors de l'étape de traitement thermique des matériaux constitutifs des couches polymères thermoplastiques de compositions différentes, notamment semi-conductrice(s) et électriquement isolante(s), mélangés dans l'étape (a), ces matériaux sont traités thermiquement (et typiquement fondus) ensemble. On entend par là que les matériaux constitutifs des deux couches polymères thermoplastiques de compositions différentes sont traités thermiquement (et typiquement fondus) ensemble, à l'état solide. Cela peut permettre de simplifier le procédé de préparation du matériau polymère thermoplastique M.

Ainsi, selon un premier mode de réalisation possible, les matériaux constitutifs des deux couches polymères thermoplastiques de compositions différentes sont traités thermiquement (et typiquement fondus) ensemble après avoir été séparés du câble de façon non-sélective. Selon un deuxième mode de réalisation possible, ils sont traités thermiquement (et typiquement fondus) ensemble directement sur le câble, sans avoir été préalablement séparés du câble. Dans ce mode de réalisation, les matériaux traités thermiquement (et typiquement fondus) sont récupérés du câble et mélangés selon l'étape (a) du procédé de l'invention. Selon un troisième mode de réalisation possible, les matériaux constitutifs des deux couches polymères thermoplastiques de compositions différentes sont séparés du câble de façon non-sélective puis traités thermiquement (et typiquement fondus) ensemble, le tout de manière continue.

Dans le cas où les matériaux constitutifs des deux couches polymères thermoplastiques de compositions différentes, notamment semi-conductrice et électriquement isolante, sont fondus ensemble, le chauffage est réalisé de préférence à une température supérieure à la température de fusion des polymères majoritaires ou du polymère ayant la température de fusion la plus élevée, parmi les polymères utilisés dans les compositions polymères thermoplastiques des deux couches polymères thermoplastiques, notamment semi-conductrice et électriquement isolante.

Le chauffage peut être réalisé à une température supérieure à 170°C, mieux supérieure à 180°C, encore mieux supérieure à 190°C.

Le chauffage peut être réalisé à une température inférieure ou égale à 260°C, mieux inférieure ou égale à 250°C, encore mieux inférieure ou égale à 240°C. Cela peut permettre de limiter la dégradation thermique des compositions polymères thermoplastiques des couches polymères thermoplastiques, notamment semi-conductrice(s) et électriquement isolante(s).

Le procédé de l'invention, en particulier l'étape (a), est avantageusement réalisé au moyen d'une extrudeuse.

Selon un mode de réalisation particulier, après avoir été séparés du câble, en particulier de façon non-sélective, les matériaux constitutifs des deux couches polymères thermoplastiques de compositions différentes, notamment des couches semi-conductrice et électriquement isolante, sont introduits, par exemple sous forme de poudre ou de granulés, de préférence sous forme de granulés, dans le fourreau chauffant d'une extrudeuse. Les matériaux constitutifs des deux couches sont introduits ensemble dans le fourreau via une même trémie d'alimentation. Le cisaillement provoqué par l'actionnement de la vis sans fin combiné à l'apport de chaleur au sein du fourreau permettent de ramollir voire fondre les compositions polymères thermoplastiques des matériaux constitutifs de chacune des deux couches, notamment semi-conductrice et électriquement isolante. L'actionnement de la vis sans fin permet par ailleurs de mélanger ensemble les compositions ramollies voire fondues des matériaux constitutifs de chacune des deux couches de manière à obtenir un mélange homogène à l'état fluide. On obtient ainsi le matériau polymère thermoplastique M issu de ce mélange, qui peut être mis en forme, par exemple en traversant une filière d'extrusion, de manière à obtenir en sortie d'extrudeuse le matériau polymère thermoplastique M sous forme de granulés après refroidissement.

Le matériau polymère thermoplastique M obtenu, issu du mélange des matériaux constitutifs des couches polymères thermoplastiques de compositions différentes, notamment semi-conductrice(s) et électriquement isolante(s), présente l'avantage, en raison de sa bonne homogénéité et de ses propriétés mécaniques et physico-chimiques remarquables, de pouvoir être valorisé en tant que matière première recyclée dans diverses applications qui seront décrites ci-dessous.

### Composition polymère thermoplastique

La composition polymère thermoplastique de chacune des deux couches polymères thermoplastiques, notamment semi-conductrice et électriquement isolante, peut comporter au moins un homoplolymère ou copolymère de propylène, et de préférence au moins un copolymère de propylène, notamment un copolymère statistique de propylène ou un copolymère de propylène hétérophasé.

L'homopolymère de propylène a de préférence un module élastique allant de 1250 à 1600 MPa environ.

L'homopolymère de propylène peut représenter au moins 10% en poids environ, et de préférence de 15 à 30% en poids environ, par rapport au poids total de la composition polymère thermoplastique.

À titre d'exemples de copolymères de propylène, on peut citer les copolymères de propylène et d'oléfine, l'oléfine étant notamment choisie parmi l'éthylène et une oléfine α1 différente du propylène.

L'éthylène ou l'oléfine α1 du copolymère de propylène et d'oléfine représente de préférence au plus 15% en mole environ, et de préférence encore au plus 10% en mole environ, par rapport au nombre de moles total de copolymère de propylène et d'oléfine.

L'oléfine α1 peut répondre à la formule CH2=CH-R¹, dans laquelle R¹ est un groupe alkyle linéaire ou ramifié ayant de 2 à 12 atomes de carbone, notamment choisie parmi les oléfines α1 suivantes : 1-butène, 1-pentène ; 4-méthyl-1-pentène, 1-hexène, 1-octène, 1-décène, 1-dodécène, et un de leurs mélanges.

Les copolymères de propylène et d'éthylène sont préférés à titre de copolymères de propylène.

Le copolymère statistique de propylène a de préférence un module élastique allant de 600 à 1200 MPa environ.

À titre d'exemple de copolymère statistique de propylène, on peut citer celui commercialisé par la société Repsol sous la référence ISPLEN^{®} PR230C1E.

Le copolymère de propylène hétérophasé peut comprendre une phase thermoplastique de type propylène et une phase élastomère thermoplastique de type copolymère d'éthylène et d'une oléfine α2.

L'oléfine α2 de la phase élastomère thermoplastique du copolymère hétérophasé peut être le propylène.

La phase élastomère thermoplastique du copolymère hétérophasé peut représenter au moins 20% en poids environ, et de préférence au moins 45% en poids environ, par rapport au poids total du copolymère hétérophasé.

Le copolymère de propylène hétérophasé a de préférence un module élastique allant de 50 à 1200 MPa, et de façon particulièrement préférée : soit un module élastique allant de 50 à 550 MPa environ, et de façon plus particulièrement préférée allant de 50 à 250 MPa environ ; soit un module élastique allant de 600 à 1200 Mpa environ.

À titre d'exemple de copolymère hétérophasé, on peut mentionner le copolymère hétérophasé commercialisé par la société LyondellBasell sous la référence Adflex^{®}Q 200 F, ou le copolymère hétérophasé commercialisé par la société LyondellBasell sous la référence Moplen EP2967.

L'homopolymère ou le copolymère de propylène peut avoir une température de fusion supérieure à 110°C environ, de préférence supérieure à 130°C environ, de façon particulièrement préférée supérieure ou égale à 140°C environ.

L'homopolymère ou le copolymère de propylène peut avoir une enthalpie de fusion allant de 20 à 100 J/g environ.

En particulier, l'homopolymère de propylène a une enthalpie de fusion allant de 80 à 90 J/g environ.

Le copolymère statistique de propylène peut avoir une enthalpie de fusion allant de 40 à 80 J/g environ.

Le copolymère hétérophasé de propylène peut avoir une enthalpie de fusion allant de 20 à 50 J/g environ.

L'homopolymère ou le copolymère de propylène peut avoir un indice de fluidité allant de 0,5 à 3 g/10 min, mesuré à 230°C environ avec une charge de 2,16 kg environ selon la norme ASTM D1238-00.

Le copolymère statistique de propylène peut avoir un indice de fluidité allant de 1,2 à 2,5 g/10 min, et de préférence allant de 1,5 à 2,5 g/10 min, mesuré à 230°C environ avec une charge de 2,16 kg environ selon la norme ASTM D1238-00.

Le copolymère hétérophasé de propylène peut avoir un indice de fluidité allant de 0,5 à 1,5 g/10 min, et de préférence allant de 0,5 à 1,4 g/10 min, mesuré à 230°C environ avec une charge de 2,16 kg environ selon la norme ASTM D1238-00.

La composition polymère thermoplastique de chacune des deux couches polymères thermoplastiques, notamment semi-conductrice et électriquement isolante, peut comporter au moins deux copolymères de propylène différents, notamment un copolymère statistique de propylène (en tant que premier copolymère de propylène) et un copolymère de propylène hétérophasé (en tant que deuxième copolymère de propylène), ou deux copolymères de propylène hétérophasés différents, lesdits copolymères de propylène étant tels que définis ci-dessus.

Lorsque la composition polymère thermoplastique de chacune des deux couches polymères thermoplastiques, notamment semi-conductrice et électriquement isolante, comporte un copolymère statistique de propylène et un copolymère de propylène hétérophasé, ledit copolymère de propylène hétérophasé a de préférence un module élastique allant de 600 à 1200 Mpa environ.

Selon une forme de réalisation de l'invention, les deux copolymères de propylène hétérophasés ont un module élastique différent. De préférence, la composition polymère thermoplastique de chacune des deux couches polymères thermoplastiques, notamment semi-conductrice et électriquement isolante, comprend un premier copolymère de propylène hétérophasé ayant un module élastique allant de 50 à 550 MPa environ, et de façon particulièrement préférée allant de 50 à 250 MPa environ ; et un deuxième copolymère de propylène hétérophasé ayant un module élastique allant de 600 à 1200 MPa environ.

Avantageusement, les premier et deuxième copolymères de propylène hétérophasés ont un indice de fluidité tel que défini plus haut.

Ces combinaisons de copolymères de propylène peuvent permettre avantageusement d'améliorer les propriétés mécaniques des couches polymères thermoplastiques, notamment semi-conductrice et électriquement isolante. En particulier, la combinaison permet d'obtenir des propriétés mécaniques optimisées des couches, notamment en termes d'allongement à la rupture, et de flexibilité ; et/ou permet de former des couches plus homogènes.

Selon une forme de réalisation préférée, le copolymère de propylène ou les copolymères de propylène lorsqu'il y en a plusieurs, représente(nt) au moins 50% en poids environ, de préférence de 55 à 90% en poids environ, et de préférence encore de 60 à 90% en poids environ, par rapport au poids total de la composition polymère thermoplastique.

Le copolymère statistique de propylène peut représenter au moins 20% en poids environ, et de préférence de 30 à 70% en poids environ, par rapport au poids total de la composition polymère thermoplastique.

Le copolymère hétérophasé de propylène, ou les copolymères de propylène hétérophasés lorsqu'il y en plusieurs, peu(ven)t représenter de 5 à 95% en poids environ, de préférence de 50 à 90% en poids environ, et de façon particulièrement préférée de 60 à 80% en poids environ, par rapport au poids total de la composition polymère thermoplastique.

La composition polymère thermoplastique de chacune des deux couches polymères thermoplastiques, notamment semi-conductrice et électriquement isolante, peut comporter en outre au moins un homopolymère ou copolymère d'oléfine autre que le propylène.

La combinaison d'au moins un homoplolymère ou copolymère de propylène avec au moins un homopolymère ou copolymère d'oléfine autre que le propylène permet d'obtenir des couches polymères thermoplastiques, notamment semi-conductrice et électriquement, présentant de bonnes propriétés mécaniques, notamment en termes de module élastique, et électriques.

L'homopolymère ou copolymère d'oléfine autre que le propylène est de préférence un homopolymère ou copolymère d'éthylène.

L'homopolymère ou copolymère d'éthylène peut être un polyéthylène basse densité, un polyéthylène moyenne densité, ou un polyéthylène haute densité, et de préférence un polyéthylène linéaire basse densité.

Les expressions « basse densité », « moyenne densité » et « haute densité » correspondent à une densité, mesurée selon la norme ISO 1183A à une température de 23°C, allant de 0,91 à 0,925 environ, de 0,926 à 0,940 environ et de 0,941 à 0,965, respectivement.

L'homopolymère ou copolymère d'oléfine autre que le propylène peut représenter de 5 à 50% en poids environ, et de préférence de 10 à 40% en poids environ, par rapport au poids total de la composition polymère thermoplastique.

Dans un exemple préféré, la composition polymère thermoplastique de chacune des deux couches polymères thermoplastiques, notamment semi-conductrice et électriquement isolante, comporte au moins deux copolymères de propylène différents, notamment un copolymère statistique de propylène et un copolymère de propylène hétérophasé, ou deux copolymères de propylène hétérophasés différents, et un homopolymère ou copolymère d'oléfine autre que le propylène, notamment un homopolymère ou copolymère d'éthylène.

La composition polymère thermoplastique de chacune des deux couches polymères thermoplastiques, notamment semi-conductrice et électriquement isolante, est de préférence hétérophasée (i.e. elle comprend plusieurs phases). La présence de plusieurs phases provient généralement du mélange de deux polyoléfines différentes, tel qu'un mélange d'au moins deux copolymères de propylène différents ou un mélange d'un homopolymère ou copolymère de propylène avec un homopolymère ou copolymère d'éthylène.

### Charge conductrice

Dans le cas où les couches polymères thermoplastiques, dont les matériaux constitutifs sont utilisés pour la préparation du matériau polymère thermoplastique M, comportent au moins une couche semi-conductrice et au moins une couche électriquement isolante, la composition polymère thermoplastique de la couche semi-conductrice peut comporter une charge conductrice en quantité suffisante pour rendre la couche semi-conductrice.

La composition polymère thermoplastique de la couche semi-conductrice peut comporter au moins 6% en poids environ de charge conductrice, de préférence au moins 15% en poids environ de charge conductrice, et encore plus préférentiellement au moins 25% en poids environ de charge conductrice, par rapport au poids total de la composition polymère de la couche semi-conductrice.

La composition polymère thermoplastique de la couche semi-conductrice peut comporter au plus 45% en poids environ de charge conductrice, et de préférence au plus 40% en poids environ de charge conductrice, par rapport au poids total de la composition polymère de la couche semi-conductrice.

Lorsqu'une des deux couches polymères thermoplastique est une couche électriquement isolante, la composition thermoplastique de cette dernière peut comporter moins de 0,5% en poids de charge conductrice, par rapport au poids total de la composition polymère de la couche électriquement isolante.

La charge conductrice est de préférence une charge électriquement conductrice.

La charge conductrice peut être choisie parmi du noir de carbone, du graphite, des nanotubes de carbone, des poudres de polymères conducteurs intrinsèques et leurs mélanges.

La charge conductrice est de préférence du noir de carbone.

La composition polymère thermoplastique de chacune des couches semi-conductrice et électriquement isolante peut comporter au moins un composé additionnel choisi parmi un antioxydant, un liquide diélectrique et leurs mélanges.

### Premier antioxydant

La composition polymère thermoplastique de chacune des deux couches polymères thermoplastiques, notamment semi-conductrice et électriquement isolante, peut comporter un premier antioxydant, notamment choisi parmi les phénols encombrés, les amines aromatiques, et les hétérocycliques aromatiques azotés.

Les phénols encombrés sont généralement des phénols substitués en position ortho par un ou plusieurs groupements hydrocarbonés.

Les amines aromatiques comprennent généralement au moins une fonction amine relié à au moins un cycle aromatique tel qu'un phényle.

Les hétérocycliques aromatiques azotés comprennent généralement au moins un hétérocycle aromatique comprenant un ou plusieurs (e.g. deux) atomes d'azote dans l'hétérocycle aromatique.

La composition polymère thermoplastique de chacune des deux couches polymères thermoplastiques, notamment semi-conductrice et électriquement isolante, peut comporter au moins 0,3% en poids environ, de préférence au moins 0,5% en poids environ, et de façon particulièrement préférée au moins 0,75% en poids environ du premier antioxydant, par rapport au poids total de la composition polymère thermoplastique.

La composition polymère thermoplastique de chacune des deux couches polymères thermoplastiques, notamment semi-conductrice et électriquement isolante, peut comporter au plus 2,5% en poids environ, de préférence au plus 2,0% en poids environ, et de façon particulièrement préférée au plus 1,5% en poids environ du premier antioxydant, par rapport au poids total de la composition polymère thermoplastique.

En effet, une quantité supérieure à 2,5% peut induire l'apparition de phénomènes d'exsudation de l'antioxydant. En outre, des quantités élevées d'antioxydant peuvent augmenter le coût de production du câble.

À titre d'exemples de phénols encombrés, on peut citer le pentaérythritol tétrakis(3-(3,5-di-tert-butyl-4-hydroxyphényl)propionate) (Irganox^{®}1010), l'octadécyl 3-(3,5-di-tert-butyl-4-hydroxyphényl)propionate (Irganox^{®}1076), le 1,3,5-triméthyl-2,4,6-tris(3,5-di-tert-butyl-4-hydroxybenzyl)benzène (Irganox^{®}1330), le 4,6-bis (octylthiométhyl)-o-crésol (Irgastab^{®}KV10 ou Irganox^{®}1520), le 2,2'-thiobis(6-tert-butyl-4-méthylphénol) (Irganox^{®}1081), le 2,2'-thiodiéthylène bis[3-(3,5-di-tert-butyl-4-hydroxyphényl) propionate] (Irganox^{®}1035), le 2,2'-méthylènebis(6-tert-butyl-4-méthylphénol) ou le tris (3,5-di-tert-butyl-4-hydroxybenzyl) isocyanurate (Irganox^{®}3114).

À titre d'exemples d'amines aromatiques, on peut citer les phénylène diamines (e.g. paraphénylène diamines telles que 1PPD ou 6PPD), les diphénylamine styrène, les diphénylamines, ou le 4-(1-méthyl-1-phényléthyl)-N-[4-(1-méthyl-1-phényléthyl)phényl]aniline (Naugard 445).

À titre d'exemples d'hétérocycliques aromatiques azotés, on peut citer les mercapto benzimidazoles ou les dérivés de la quinoline tels que les 2,2,4-triméthyl-1,2 dihydroquinolines polymérisées (TMQ), et de préférence les mercapto benzimidazoles.

Les TMQ peuvent avoir différents grades, à savoir :
- un grade dit « standard » avec un faible degré de polymérisation, c'est-à-dire avec un taux de monomère résiduel supérieur à 1 % en poids et ayant une teneur en NaCl résiduelle pouvant aller de 100 ppm à plus de 800 ppm (parties par million massiques);
- un grade dit « à haut degré de polymérisation » avec un haut degré de polymérisation, c'est-à-dire avec un taux de monomère résiduel inférieur à 1% en poids et ayant une teneur en NaCl résiduelle pouvant aller de 100 ppm à plus de 800 ppm ;
- un grade dit « à faible teneur en sel résiduel » avec une teneur en NaCl résiduelle inférieure à 100 ppm.

### Désactivateur de métal

Dans le cas où les couches polymères thermoplastiques, dont les matériaux constitutifs sont utilisés pour la préparation du matériau polymère thermoplastique M, comportent au moins une couche semi-conductrice et au moins une couche électriquement isolante, la composition polymère thermoplastique de la couche semi-conductrice peut comporter un désactivateur de métal, différent du premier antioxydant.

En particulier, ladite couche semi-conductrice entoure et est en contact physique direct avec l'élément électriquement conducteur allongé du câble ou entoure la couche électriquement isolante du câble.

Le désactivateur de métal peut être choisi parmi les hétérocycles aromatiques azotés, et les composés aromatiques comprenant au moins une fonction -NH-C(=O)-.

À titre d'exemples d'hétérocycliques aromatiques azotés, on peut citer les dérivés de la quinoline tels que les 2,2,4-triméthyl-1,2 dihydroquinolines polymérisées (TMQ).

À titre d'exemples de composés aromatiques comprenant au moins une fonction -NH-C(=O)-, on peut citer ceux comprenant deux fonctions -NH-C(=O)-, de préférence comprenant deux fonctions -NH-C(=O)- liées de façon covalente, et de façon plus particulièrement préférée comprenant un groupe divalent -NH-C(=O)-C(=O)-NH- ou -C(=O)-NH-NH-C(=O)-, tels que le 2,2' oxamidobis-[éthyl-3-(3,5-di-tert-butyl-4-hydroxyphényl) propionate] (Naugard XL-1), le 2',3-bis[[3-[3,5-di-tert-butyl-4-hydroxy phenyl]propionyl]] propionohydrazide ou 1,2-bis(3,5-di-tert-butyl-4-hydroxyhydrocinnamoyl) hydrazine (Irganox^{®}1024 ou Irganox^{®}MD 1024), ou l'oxalyl bis(benzylidenehydrazide).

La composition polymère thermoplastique de la couche semi-conductrice peut comporter au moins 0,2% en poids environ, de préférence au moins 0,4% en poids environ, et de façon particulièrement préférée au moins 0,6% en poids environ du désactivateur de métal, par rapport au poids total de la composition polymère thermoplastique.

La composition polymère thermoplastique de la couche semi-conductrice peut comporter au plus 1,5% en poids environ, de préférence au plus 1,0% en poids environ, et de façon particulièrement préférée au plus 0,75% en poids environ du désactivateur de métal, par rapport au poids total de la composition polymère thermoplastique.

La combinaison d'un désactivateur de métal et d'un premier antioxydant permet d'obtenir une bonne stabilité thermique de la couche polymère thermoplastique semi-conductrice, malgré la présence des charges conductrices pouvant être comprises dans cette couche.

Le désactivateur de métal permet notamment de protéger la couche polymère thermoplastique semi-conductrice contre les ions métalliques pouvant se trouver dans les charges conductrices sous la forme de traces, mais également dans l'élément électriquement conducteur allongé du câble.

### Le liquide diélectrique

La composition polymère thermoplastique de chacune des deux couches polymères thermoplastiques, notamment semi-conductrice et électriquement isolante, peut comporter un liquide diélectrique, notamment formant un mélange intime avec la composition polymère thermoplastique.

Le liquide diélectrique peut représenter de 1% à 20% en poids environ, de préférence de 2 à 15% en poids environ, et de préférence encore de 3 à 12% en poids environ, par rapport au poids total de la composition polymère thermoplastique.

Le liquide diélectrique peut comprendre une huile et au moins un composé polaire.

L'huile peut représenter au moins 70% en poids environ, de préférence au moins 80% en poids environ, et de façon particulièrement préférée au moins 90% en poids environ, par rapport au poids total du liquide diélectrique.

Le composé polaire peut représenter au moins 2,5% en poids environ, de préférence au moins 3,5% en poids environ, et encore plus préférentiellement au moins 4% en poids environ, par rapport au poids total du liquide diélectrique.

L'huile peut être choisie parmi les huiles minérales (e.g. huiles naphténiques, huiles paraffiniques ou huiles aromatiques), les huiles végétales (e.g. huile de soja, huile de lin, huile de colza, huile de maïs ou huile de ricin) et les huiles synthétiques, telles que les hydrocarbures aromatiques (alkylbenzènes, alkylnaphtalènes, alkylbiphényles, alkydiaryléthylènes, etc.), les huiles de silicone, les éther-oxydes, les esters organiques ou les hydrocarbures aliphatiques.

De préférence, l'huile est une huile minérale.

L'huile minérale est de préférence liquide à 20-25°C environ.

L'huile minérale peut être choisie parmi les huiles naphténiques et les huiles paraffiniques.

L'huile minérale est de préférence obtenue à partir du raffinage d'un brut pétrolier.

Selon une forme de réalisation particulièrement préférée de l'invention, l'huile minérale comprend une teneur en carbone paraffinique (Cₚ) allant de 45 à 65% atomique environ, une teneur en carbone naphténique (Cₙ) allant de 35 à 55% atomique environ et une teneur en carbone aromatique (Cₐ) allant de 0,5 à 10% atomique environ.

Le composé polaire peut être de type benzophénone, acétophénone ou un de leurs dérivés.

Le composé polaire de type benzophénone, acétophénone ou un de leurs dérivés est de préférence choisi parmi la benzophénone, la dibenzosubérone, la fluorénone et l'anthrone. La benzophénone est particulièrement préférée.

### Deuxième antioxydant

La composition polymère thermoplastique de chacune des deux couches polymères thermoplastiques, notamment semi-conductrice et électriquement isolante, peut comporter un deuxième antioxydant différent du premier antioxydant.

Le deuxième antioxydant peut être choisi parmi les antioxydants à base de soufre et les antioxydants à base de phosphore.

À titre d'exemples d'antioxydants à base de soufre, on peut citer les thioéthers tels que le didodécyl-3,3'-thiodipropionate (Irganox^{®}PS800), le distéaryl thiodipropionate ou dioctadecyl-3,3'-thiodipropionate (Irganox^{®}PS802), le bis[2-méthyle-4-{3-n-alkyle (C12ou C14) thiopropionyloxy}-5-tert-butylphényl]sulfide, le thiobis-[2-tert-butyl-5-méthyle-4,1-phénylène] bis [3-(dodécylthio)propionate], ou le 4,6-bis(octylthiométhyle)-o-crésol (Irganox^{®}1520 ou Irgastab^{®}KV10).

À titre d'exemples d'antioxydants à base de phosphore, on peut citer les phosphites ou les phosphonates, tels que le tris(2,4-di-tert-butyl-phényle)phosphite (Irgafos^{®}168) ou le bis(2,4-di-tert-butylphényl)pentaérythritol diphosphite (Ultranox^{®}626).

La composition polymère thermoplastique de chacune des deux couches polymères thermoplastiques, notamment semi-conductrice et électriquement isolante, peut comporter au moins 0,2% en poids environ, de préférence au moins 0,3% en poids environ, et de façon particulièrement préférée au moins 0,5% en poids environ du deuxième antioxydant, par rapport au poids total de la composition polymère thermoplastique.

La composition polymère thermoplastique de chacune des deux couches polymères thermoplastiques, notamment semi-conductrice et électriquement isolante, peut comporter au plus 2,0% en poids environ, de préférence au plus 1,5% en poids environ, et de façon particulièrement préférée au plus 1,0% en poids environ du deuxième antioxydant, par rapport au poids total de la composition polymère thermoplastique.

Selon une forme de réalisation particulièrement préférée de l'invention, le premier antioxydant, le deuxième antioxydant et le désactivateur de métal représentent au moins 0,6% en poids environ, de préférence au moins 0,9% en poids environ, et de façon particulièrement préférée au moins 1,2% en poids environ, par rapport au poids total de la composition polymère thermoplastique de la couche polymère thermoplastique semi-conductrice.

Selon une forme de réalisation particulièrement préférée de l'invention, le premier antioxydant, le deuxième antioxydant et le désactivateur de métal représentent au plus 2,5% en poids environ, de préférence au plus 2,0% en poids environ, et de façon particulièrement préférée au plus 1,5% en poids environ, par rapport au poids total de la composition polymère thermoplastique de la couche polymère thermoplastique semi-conductrice.

### Matériau polymère thermoplastique (M)

Un autre objet de l'invention est le matériau polymère thermoplastique (M), notamment à base de polypropylène, susceptible d'être obtenu par le procédé selon l'invention.

Le matériau polymère thermoplastique (M) peut se présenter sous la forme de granulés. Ces granulés peuvent être valorisés en tant que matière première recyclée dans diverses applications qui seront décrites ci-dessous, comme par exemple pour la fabrication de filets ou grillages, notamment pour l'aquaculture ou l'arboriculture, d'emballages, notamment de protection et/ou de transport, de palettes de transport et/ou de stockage, de containers de transport et/ou de stockage, etc.

Le matériau polymère thermoplastique M présente des propriétés mécaniques et physico-chimiques particulièrement remarquables.

En général, il s'avère à la fois résistant mécaniquement et flexible.

Il présente par ailleurs le plus souvent une résistance aux UV, en particulier lorsqu'il comporte des charges conductrices, telles que le noir de carbone, généralement présentes dans les couches polymères thermoplastiques de départ de départ, en particulier dans les couches semi-conductrices.

Le matériau polymère thermoplastique M peut présenter une densité comprise entre 0,910 et 0,940 g/cm³, par exemple comprise entre 0,915 et 0,935 g/cm³, notamment comprise entre 0,920 et 0,930 g/cm³.

Le matériau polymère thermoplastique M peut présenter un indice de fluidité à chaud compris entre 1,0 et 4,0 g/10 min, par exemple compris entre 1,5 et 3,5 g/10 min, notamment compris entre 2,0 et 3,0 g/10 min.

Le matériau polymère thermoplastique M peut présenter une résistance au choc Izod à 23°C supérieure à 50 kJ/m².

Le matériau polymère thermoplastique M peut présenter un allongement au seuil d'écoulement supérieur à 16%.

Le matériau polymère thermoplastique M peut présenter un allongement à la rupture supérieur à 400%.

Le matériau polymère thermoplastique M peut présenter un module d'Young en traction compris entre 50 et 550 MPa.

Le matériau polymère thermoplastique M peut présenter un module d'Young en flexion compris entre 50 et 600 MPa.

Selon un mode de réalisation particulier, le matériau polymère thermoplastique M présente les propriétés suivantes : une densité comprise entre 0,910 et 0,940 g/cm³, par exemple comprise entre 0,915 et 0,935 g/cm³, notamment comprise entre 0,920 et 0,930 g/cm³, un indice de fluidité à chaud compris entre 1,0 et 4,0 g/10 min, par exemple compris entre 1,5 et 3,5 g/10 min, notamment compris entre 2,0 et 3,0 g/10 min, une résistance au choc Izod à 23°C supérieure à 50 kJ/m², un allongement au seuil d'écoulement supérieur à 16%, un allongement à la rupture supérieur à 400%, un module d'Young en flexion compris entre 50 et 600 MPa et un module d'Young en traction compris entre 50 et 550 MPa.

La densité est mesurée selon la norme ASTM D 1505.

L'indice de fluidité est mesuré à 230°C environ avec une charge de 2,16 kg environ selon la norme ASTM D1238-00.

La résistance au choc IZOD avec entaille (mesurée à 23 °C et à -30 °C) est pratiquée sur des éprouvettes injectées à 230°C de dimensions 80*10*4 mm, l'entaillage et le protocole d'essai étant conformes à la norme ISO 180:2019.

L'allongement à la traction est mesuré sur des plaques d'épaisseur 0,7 mm préparées à partir du matériau polymère thermoplastique M et moulées à 205°C avec une presse à plateaux. Des éprouvettes de traction de type ASTM D 1708 sont découpées à l'aide d'emporte-pièce dans lesdites plaques. L'allongement à la traction (déformation au seuil d'écoulement et déformation à la rupture) est mesuré selon la norme ASTM D 638 à température ambiante.

Le Module de Young en traction est déterminé par des essais de traction selon la norme ISO 527-1:2019 à 23°C, les éprouvettes étant du type « haltères » ISO 37-2 et la vitesse de traction utilisée étant de 100 mm/min.

Le Module de Young en flexion est déterminé par des essais de flexion selon la norme ISO 178:2019 à 23°C.

Composition polymère thermoplastique (C)

Le procédé de l'invention permet notamment d'obtenir une composition polymère thermoplastique (C) particulière qui comporte :
- au moins un homopolymère ou copolymère de propylène, et
- au moins une charge conductrice en une quantité telle que la conductivité électrique de la composition polymère thermoplastique (C) soit comprise entre 1.10⁻¹⁰ et 1.10⁻³ S/m (siemens par mètre) (mesurée à 25°C en courant continu), ou entre 1 et 5% en poids de noir de carbone, par rapport au poids total de la composition polymère thermoplastique C.

Cette composition polymère thermoplastique C constitue un autre objet de l'invention.

De préférence, le matériau obtenu à partir de la composition polymère thermoplastique C possède une conductivité comprise entre 1.10⁻¹⁰ et 1.10⁻³ S/m (siemens par mètre) (mesurée à 25°C en courant continu).

La composition polymère thermoplastique C peut comporter au moins un copolymère de propylène, notamment un copolymère statistique de propylène ou un copolymère de propylène hétérophasé.

La composition polymère thermoplastique C peut comporter au moins deux copolymères de propylène différents, notamment un copolymère statistique de propylène et un copolymère de propylène hétérophasé, ou deux copolymères de propylène hétérophasés différents.

La composition polymère thermoplastique C peut comprendre en outre au moins un homopolymère ou copolymère d'oléfine autre que le propylène.

L'homopolymère ou copolymère d'oléfine autre que le propylène est de préférence un homopolymère ou copolymère d'éthylène.

L'homopolymère ou copolymère d'éthylène peut être un polyéthylène basse densité, un polyéthylène moyenne densité, ou un polyéthylène haute densité, et de préférence un polyéthylène linéaire basse densité.

Les expressions « basse densité », « moyenne densité » et « haute densité » correspondent à une densité, mesurée selon la norme ISO 1183A à une température de 23°C, allant de 0,91 à 0,925 environ, de 0,926 à 0,940 environ et de 0,941 à 0,965, respectivement.

L'homopolymère ou copolymère d'oléfine autre que le propylène peut représenter de 5 à 50% en poids environ, et de préférence de 10 à 40% en poids environ, par rapport au poids total de la composition polymère thermoplastique C.

Dans un exemple préféré, la composition polymère thermoplastique C comporte au moins deux copolymères de propylène différents, notamment un copolymère statistique de propylène et un copolymère de propylène hétérophasé, ou deux copolymères de propylène hétérophasés différents, et un homopolymère ou copolymère d'oléfine autre que le propylène, notamment un homopolymère ou copolymère d'éthylène.

La charge conductrice est de préférence une charge électriquement conductrice.

La charge conductrice peut être choisie parmi du noir de carbone, du graphite, des nanotubes de carbone, des poudres de polymères conducteurs intrinsèques et leurs mélanges.

La charge conductrice est de préférence du noir de carbone.

### Objet comportant le matériau polymère thermoplastique M ou obtenu à partir de la composition polymère thermoplastique C

L'invention a encore pour objet un objet, tel qu'un filet ou grillage, notamment pour l'aquaculture ou l'arboriculture, ou tel qu'un emballage, notamment de protection et/ou de transport, ou tel qu'une palette de transport et/ou de stockage, ou tel qu'un container de transport et/ou de stockage, comportant le matériau polymère thermoplastique M tel que défini ci-dessus, ou obtenu à partir de la composition polymère thermoplastique C telle que définie ci-dessus.

Par exemple, de tels filets ou grillages peuvent être utilisés pour la fabrication de poches ostréicoles ou être destinés à entourer le tronc de jeunes arbres ou à protéger des gouttières, notamment de l'accumulation de feuilles à l'intérieur des gouttières, etc.

Il devient alors possible de fabriquer des objets à partir d'un matériau recyclé, à savoir le matériau polymère thermoplastique M obtenu par le procédé selon l'invention à partir des matériaux constitutifs de couches polymères thermoplastiques d'un câble électrique ou la composition polymère thermoplastique C lorsque cette dernière est obtenue par le procédé selon l'invention.

Les objets comportant le matériau polymère thermoplastique M ou obtenus à partir de la composition polymère thermoplastique C peuvent être souples ou semi-rigides.

En outre, la présence de charges conductrices, telles que le noir de carbone, au sein du matériau polymère thermoplastique M ou de la composition polymère thermoplastique C peut permettre de conférer aux objets, en autres, des propriétés mécaniques améliorées et une protection contre les UV.

Le matériau polymère thermoplastique M ou la composition polymère thermoplastique C sont ainsi particulièrement bien adaptés à la fabrication d'objets nécessitant une résistance aux UV, notamment les objets exposés à la lumière du soleil de par leurs applications finales.

Les objets comportant le matériau polymère thermoplastique M ou obtenus à partir de la composition polymère thermoplastique C peuvent être fabriqués par des techniques telles que l'extrusion, le moulage par injection, le thermoformage, le rotomoulage, le calandrage, et de préférence par extrusion.

### Utilisation du matériau polymère thermoplastique M ou de la composition polymère thermoplastique C

Selon un mode de réalisation particulier, le matériau polymère thermoplastique M tel que défini ci-dessus ou la composition polymère thermoplastique C telle que définie ci-dessus peuvent être utilisés pour fabriquer un matériau polymère thermoplastique (M') ou une composition polymère thermoplastique (C') enrichis en charge conductrice en une quantité telle que la conductivité électrique du matériau polymère thermoplastique M' ou de la composition polymère thermoplastique C' soit strictement supérieure à 1.10⁻³ S/m (siemens par mètre) (mesurée à 25°C en courant continu), ou enrichis en noir de carbone de telle manière à obtenir une teneur d'au moins 6% en poids de noir de carbone, par rapport au poids total, respectivement, du matériau polymère thermoplastique (M') ou de la composition polymère thermoplastique (C').

Cet enrichissement est typiquement réalisé par ajout d'une charge conductrice dans le matériau polymère thermoplastique M ou la composition polymère thermoplastique C.

Cet enrichissement peut être réalisé lors du mélange de l'étape (a) du procédé selon l'invention ou postérieurement. Par exemple, après l'étape (a), le matériau polymère thermoplastique M ou la composition polymère thermoplastique C obtenus peuvent être mis en forme et refroidis, de manière à être obtenus par exemple sous forme de granulés solides. Ces granulés peuvent être introduits au sein d'une extrudeuse afin de former en sortie une couche extrudée semi-conductrice d'un câble. L'enrichissement peut alors avoir lieu au sein de cette extrudeuse.

Le matériau polymère thermoplastique M' et la composition polymère thermoplastique C' enrichis peuvent être utilisés pour la fabrication de couches semi-conductrices de câbles électriques.

Cette utilisation particulière constitue un autre objet de l'invention.

L'ajout de charge conductrice, telle que le noir de carbone, dans le matériau polymère thermoplastique M ou la composition polymère thermoplastique C permet d'ajuster leurs propriétés conductrices de manière à ce qu'ils puissent être utilisés pour la fabrication de couches semi-conductrices de câbles.

Il devient alors possible de fabriquer des couches semi-conductrices de câbles électriques à partir de matériaux recyclés provenant du mélange de couches polymères thermoplastiques de compositions différentes, notamment des couches semi-conductrice(s) et électriquement isolante(s), d'un câble.

De préférence, le matériau polymère thermoplastique M' ou la composition polymère thermoplastique C' sont enrichis en charge conductrice en une quantité telle que la conductivité électrique du matériau polymère thermoplastique M' ou de la composition polymère thermoplastique C' soit inférieure à 1.10³ S/m (siemens par mètre) (mesurée à 25°C en courant continu).De préférence, le matériau polymère thermoplastique M' ou la composition polymère thermoplastique C' sont enrichis en noir de carbone de telle manière à obtenir une teneur d'au moins 15% en poids de noir de carbone, et encore plus préférentiellement d'au moins 25% en poids environ de noir de carbone, par rapport au poids total, respectivement, du matériau polymère thermoplastique M' ou de la composition polymère thermoplastique C'.

Le matériau polymère thermoplastique M' ou la composition polymère thermoplastique C' peuvent être enrichis en noir de carbone de telle manière à obtenir une teneur d'au plus 45% en poids de noir de carbone, et de préférence d'au plus 40% en poids environ de noir de carbone, par rapport au poids total, respectivement, du matériau polymère thermoplastique M' ou de la composition polymère thermoplastique C'.

Bien évidemment, en fonction de l'utilisation visée, il est possible d'ajouter d'autres composés dans le matériau polymère thermoplastique M ou la composition thermoplastique C, afin d'ajuster leurs propriétés respectives en fonction de l'utilisation visée.

Ces composés peuvent être par exemple choisis parmi des charges inorganiques, des polymères, des colorants et leurs mélanges.

### Brève description des dessins

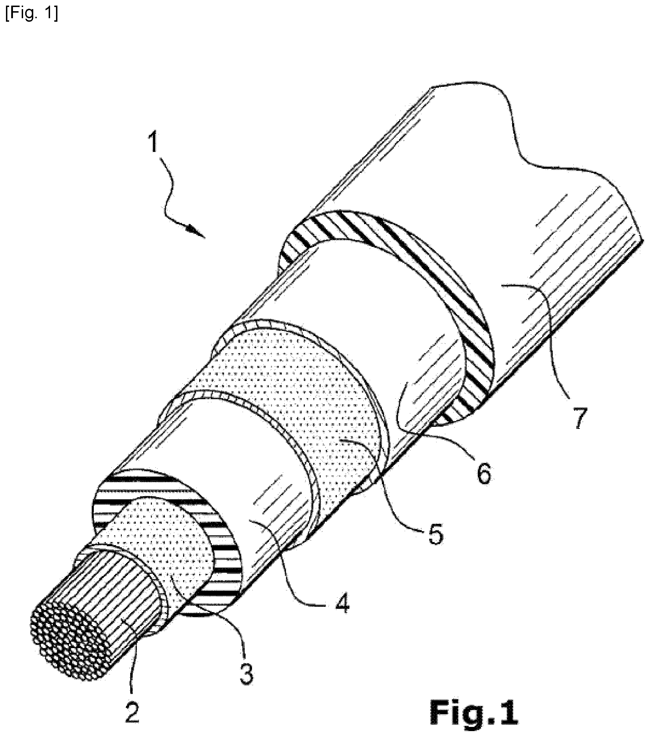

[Fig. 1] La figure 1 représente une vue schématique d'un exemple de câble électrique comportant des couches polymères thermoplastiques de compositions différentes, notamment des couches semi-conductrice(s) et électriquement isolante(s) selon l'invention.

### Description de mode(s) de réalisation

On a représenté à la figure 1 un exemple de câble électrique 1 à moyenne ou haute tension comportant un élément électriquement conducteur 2 allongé positionné au centre du câble électrique 1.

Le câble électrique 1 comprend en outre plusieurs couches disposées successivement et coaxialement autour de cet élément électriquement conducteur allongé 2, à savoir : une première couche 3 semi-conductrice dite « couche semi-conductrice interne », une couche 4 électriquement isolante, une deuxième couche 5 semi-conductrice dite « couche semi-conductrice externe », un écran métallique 6 de mise à la terre et/ou de protection, et une gaine extérieure de protection 7.

L'élément électriquement conducteur 2 allongé peut être un conducteur monocorps, tel que par exemple un fil métallique, ou un conducteur multicorps, tel que par exemple une pluralité de fils métalliques, torsadés ou non.

L'élément électriquement conducteur 2 allongé peut être en aluminium, en alliage d'aluminium, en cuivre, en alliage de cuivre, ou en une de leurs combinaisons.

La couche électriquement isolante 4 est une couche polymère thermoplastique extrudée (i.e. non réticulée), notamment obtenue à partir d'une composition polymère thermoplastique à base de polypropylène.

Les couches semi-conductrices 3 et 5 sont des couches polymères thermoplastiques extrudées (i.e. non réticulées), notamment obtenues à partir d'une composition polymère à base de polypropylène.

La gaine extérieure de protection 7 qui peut être une gaine électriquement isolante est de préférence une gaine réticulée.

La présence de l'écran métallique 6 et de la gaine extérieure de protection 7 est préférentielle, mais non essentielle, cette structure de câble étant en tant que telle bien connue de l'homme du métier.

L'écran métallique 6 peut être un écran dit « filaire » composé d'un ensemble de conducteurs en cuivre ou en aluminium arrangé autour et le long de la deuxième couche semi-conductrice, un écran dit « rubané » composé d'un ou de plusieurs rubans métalliques conducteurs en cuivre ou en aluminium posé(s) éventuellement en hélice autour de la deuxième couche semi-conductrice ou un ruban métallique conducteur en aluminium posé longitudinalement autour de la deuxième couche semi-conductrice et rendu étanche grâce à de la colle dans les zones de chevauchement de parties dudit ruban, ou d'un écran dit « étanche » de type tube métallique composé éventuellement de plomb ou d'alliage de plomb et entourant la deuxième couche semi-conductrice. Ce dernier type d'écran permet notamment de faire barrière à l'humidité ayant tendance à pénétrer le câble électrique en direction radiale.

L'écran métallique 6 peut comprendre un écran dit « filaire » et un écran dit « étanche » ou un écran dit « filaire » et un écran dit « rubané ».

Tous les types d'écrans métalliques peuvent jouer le rôle de mise à la terre du câble électrique et peuvent ainsi transporter des courants de défaut, par exemple en cas de court-circuit dans le réseau concerné.

Lorsque le procédé selon l'invention est mis en oeuvre avec le câble 1 représenté sur la figure 1, les matériaux constitutifs des couches 3 et 4, ou 4 et 5, en particulier des couches 3 et 4, et de préférence les matériaux constitutifs des couches 3, 4 et 5, sont typiquement séparées du câble 1 puis mélangées à l'état fluide de manière à préparer un matériau polymère thermoplastique M selon l'invention.

L'écran métallique 6 n'est pas utilisé dans le procédé selon l'invention. L'écran métallique 6, quel que soit son type, peut être par ailleurs recyclé par des procédés connus.

La gaine extérieure de protection 7 n'est en général pas utilisée dans le procédé selon l'invention et ce n'est en tout état de cause pas le cas lorsqu'elle est réticulée.

Le matériau polymère thermoplastique M ainsi préparé est récupéré, notamment pour être utilisé pour la fabrication d'objets tels que des filets, des grillages, des emballages, des palettes, des containers ou encore pour la fabrication de couches semi-conductrices de câbles électriques après avoir été enrichi en charge conductrice, telle que le noir de carbone.

Il est ainsi possible de recycler ensemble au moins deux couches polymères thermoplastiques du câble 1 ayant des compositions différentes, i.e. au moins les couches 3 et 4, ou les couches 4 et 5, de préférence les couches 3 et 4, voire les couches 3, 4 et 5.

## Revendications

1. Procédé de préparation d'un matériau polymère thermoplastique (M) à partir de matériaux constitutifs d'au moins deux couches polymères thermoplastiques (3 ; 4 ; 5) d'un câble électrique (1), où lesdites couches polymères thermoplastiques (3 ; 4 ; 5) ont des compositions différentes, le procédé comportant les étapes suivantes :
(a) mélange, à l'état fluide, desdits matériaux constitutifs des couches polymères thermoplastiques (3 ; 4 ; 5), ce par quoi on obtient le matériau polymère thermoplastique (M) ; puis
(b) récupération du matériau polymère thermoplastique (M) ainsi préparé.

2. Procédé selon la revendication 1, **caractérisé en ce que** chacune des couches polymères thermoplastiques (3 ; 4 ; 5) est obtenue à partir d'une composition polymère thermoplastique à base de polypropylène.

3. Procédé selon la revendication 1 ou 2, **caractérisé en ce que** les couches polymères thermoplastiques (3 ; 4 ; 5) ont des conductivités électriques différentes.

4. Procédé selon l'une quelconque des revendications précédentes, **caractérisé en ce que** les couches polymères thermoplastiques (3 ; 4 ; 5) comportent au moins une couche semi-conductrice (3 ; 5) et au moins une couche électriquement isolante (4).

5. Procédé selon l'une quelconque des revendications précédentes, **caractérisé en ce que** les matériaux constitutifs des couches polymères thermoplastiques (3 ; 4 ; 5) sont soumis à un traitement thermique lors de l'étape (a) ou préalablement à cette étape.

6. Procédé selon l'une quelconque des revendications précédentes, **caractérisé en ce que** l'étape (a) est réalisée au moyen d'une extrudeuse.

7. Procédé selon l'une quelconque des revendications 2 à 6, **caractérisé en ce que** la composition polymère thermoplastique à base de polypropylène de chacune des couches polymères thermoplastiques (3 ; 4 ; 5) comporte au moins un homopolymère ou copolymère de propylène, notamment un copolymère de propylène.

8. Procédé selon l'une quelconque des revendications 2 à 7, **caractérisé en ce que** la composition polymère thermoplastique à base de polypropylène de chacune des couches polymères thermoplastiques (3 ; 4 ; 5) comporte au moins un homopolymère ou copolymère d'oléfine autre que le propylène, notamment un homopolymère ou copolymère d'éthylène.

9. Procédé selon l'une quelconque des revendications 2 à 8, **caractérisé en ce que** la composition polymère thermoplastique à base de polypropylène de chacune des couches polymères thermoplastiques (3 ; 4 ; 5) comporte au moins un composé additionnel choisi parmi un antioxydant, un liquide diélectrique et leurs mélanges.

10. Matériau polymère thermoplastique (M), notamment à base de polypropylène, susceptible d'être obtenu par le procédé selon l'une quelconque des revendications précédentes.

11. Matériau polymère thermoplastique (M) selon la revendication 10, **caractérisé en ce que** le matériau polymère thermoplastique (M) présente au moins l'une des propriétés suivantes : une densité comprise entre 0,910 et 0,940 g/cm³, un indice de fluidité à chaud compris entre 1,0 et 4,0 g/10 min, une résistance au choc Izod à 23°C supérieure à 50 kJ/m², un allongement au seuil d'écoulement supérieur à 16%, un allongement à la rupture supérieur à 400%, un module d'Young en flexion compris entre 50 et 600 MPa et un module d'Young en traction compris entre 50 et 550 MPa.

12. Composition polymère thermoplastique (C), notamment obtenue par le procédé selon l'une quelconque des revendications 1 à 9, comportant :
- au moins un homopolymère ou copolymère de propylène, et
- au moins une charge conductrice en une quantité telle que la conductivité électrique de la composition polymère thermoplastique (C) soit comprise entre 1.10⁻¹⁰ et 1.10⁻³ S/m (siemens par mètre).

13. Filet ou grillage, notamment pour l'aquaculture ou l'arboriculture, ou emballage, notamment de protection et/ou de transport, palette de transport et/ou de stockage, container de transport et/ou de stockage comportant le matériau polymère thermoplastique (M) selon la revendication 10 ou 11, ou obtenu à partir de la composition polymère thermoplastique (C) selon la revendication 12.

14. Utilisation du matériau polymère thermoplastique (M) selon la revendication 10 ou 11, ou de la composition polymère thermoplastique (C) selon la revendication 12, pour fabriquer un matériau polymère thermoplastique (M') ou une composition polymère thermoplastique (C') enrichis en charge conductrice en une quantité telle que la conductivité électrique du matériau polymère thermoplastique (M') ou de la composition polymère thermoplastique (C') soit strictement supérieure à 1.10⁻³ S/m (siemens par mètre), pour la fabrication de couches semi-conductrices de câbles électriques.
